(19) Europäisches Patentamt
European Patent Office
Office européen des brevets

(11) EP 0 802 236 B1

(12) **EUROPEAN PATENT SPECIFICATION**

(45) Date of publication and mention of the grant of the patent:
**10.04.2002 Bulletin 2002/15**

(21) Application number: **96926639.4**

(22) Date of filing: **13.08.1996**

(51) Int Cl.[7]: **C08L 83/06**, C08G 77/16, C08L 83/04, C09D 183/04

(86) International application number:
**PCT/JP96/02291**

(87) International publication number:
**WO 97/07164 (27.02.1997 Gazette 1997/10)**

# (54) CURABLE POLYMETHYLSILSESQUIOXANE COMPOSITION

HÄRTBARE POLYMETHYLSILSESQUIOXANZUSAMMENSETZUNG

COMPOSITION DE POLYMETHYLSILSESQUIOXANE DURCISSABLE

(84) Designated Contracting States:
**BE DE FR GB NL**

(30) Priority: **15.08.1995 JP 20814395**

(43) Date of publication of application:
**22.10.1997 Bulletin 1997/43**

(73) Proprietor: **Dow Corning Asia, Ltd.**
**Tokyo 100-0005 (JP)**

(72) Inventors:
- **SAITOH, Akihito**
**Kanagawa 250 (JP)**
- **ITOH, Maki**
**Kanagawa 259-13 (JP)**

(74) Representative: **Spott, Gottfried, Dr.**
**Spott & Weinmiller**
**Patentanwälte**
**Sendlinger-Tor-Platz 11**
**80336 München (DE)**

(56) References cited:

**EP-A- 0 406 911**
**EP-A- 0 410 564**
**EP-A- 0 752 441**
**JP-A- 3 020 331**
**JP-A- 4 178 428**
**JP-A- 53 010 700**
**US-A- 4 399 266**

- **DATABASE WPI Section Ch, Week 9146 Derwent Publications Ltd., London, GB; Class A26, AN 91-336934 XP002092764 & JP 03 227321 A (TORAY DOW CORNING) , 8 October 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 802 236 B1

Printed by Jouve, 75001 PARIS (FR)

## Description

The present invention relates to a curable polymethyl silsesquioxane composition suitable for the production of relatively flexible films and monolithic products which are free of defects such as cracks that may cause problems in the practical use of the aforementioned products.

### Background of the Invention

Polysilsesquioxane is a general term for silicone resins in which a ratio of a number of oxygen atoms to a number of silicon atoms is equal to 1.5. Since these resins are characterized by high thermal resistance, electrical insulating properties, flame-resistive properties, etc., they find application in the production of semiconductors as a material for resists, interlayer dielectrics and the like [see Silicone Handbook, by Kunio Ito, Nikkan Kogyo Shimbun Publishers, 1990.]

It has long been known that polyphenyl silsesquioxane can be obtained by a method for the production of bodies of high molecular weight wherein a prepolymer obtained by equilibrating a product of hydrolysis of phenyl trichlorosilane in the presence of an alkali catalyst is then again equilibrated at high concentration in the presence of an alkali catalyst (J.F. Brown, Jr., et al. J. Am. Chem. Soc., vol. 82, page 6194, 1960.) However, synthesis of soluble polymethyl silsesquioxane can be performed using a relatively novel method which consists of dissolving methyltrichlorosilane in the presence of an amine in a mixture of ketone with ether or in one of the solvents, adding water to the solution dropwise, and heating and condensing after hydrolysis (Japanese Examined Patent Publications [Kokoku] Sho 60-17214, [Kokoku] Hei 1-43773, and US Patent 4399266.) Another method of synthesis consists in dissolving, trifunctional methyl silane in an organic solvent, adding water to the solution dropwise at a temperature of from -20°C to -50°C in the presence of an additional inert gas of pressure of 1000 to 3000 Pa, and after hydrolysis, subjecting the mixture to heating and condensing [EP No. 0406911A1]. Still another method of synthesis consists of causing a reaction between methyl triacetoxy silane and an equivalent quantity of alcohol in an organic solvent, thus obtaining alkoxyacetoxy silane. The latter is then formed into a prepolymer by being subjected to polycondensation in an organic solvent and in the presence of sodium hydrogen carbonate. The obtained prepolymer is then subjected to condensation with heating in the presence of at least one catalyst selected from the group consisting of alkali metal hydroxide, alkali earth metal hydroxide, alkali metal fluoride, alkali earth metal fluoride, and triethylamine [Japanese Laid- Open Patent Application (Kokai) Hei 3-20331]. One more method of synthesis consists of dissolving an alkali metal carboxylate and lower alcohol in a liquid mixture formed by two layers of water and a hydrocarbon-type solvent. A hydrolysis is then carried out by adding methyltrihalosilane by dripping. The mixture is then subjected to condensation with heating [Japanese Laid-Open Patent Application (Kokai) 3-227321].

A common characteristic feature of all polymethyl silsesquioxanes obtained by any of the above-described methods consists in that they are hard but brittle. Attempts have been made to solve the above problem. Thus, Japanese Examined Patent Publication [Kokoku] Hei 1-43773 describes a method wherein 15 to 30% (by weight) of polymethyl silsesquioxane are accounted for, with a portion having less than 2000 molecular weight calculated for polystyrene in gel-permeation chromatography (GPC). However, this polymer was suitable for coating films having a thickness only up to 1.8 to 2.0 μm, and in the case of EP No. 0406911A1 the coating film could be produced without cracks if the maximum thickness of the film does not exceed 3 to 3.5 μm. Thicker films were subject to cracking and did not possess flexibility required for the manufacture of freestanding films.

Freestanding films made of cured polymethyl silsesquioxane can be obtained by using methyltrimethoxy silane as a starting material which is dissolved in methanol, subjected to hydrolysis by dripping water that contains hydrochloric acid, and then subjecting the mixture to condensation with heating, thus producing a polymer. An acetone solution of the aforementioned polymer is then cast and cured with heating to a temperature of 80 to 120°C [see Abe et al., Preprints of the 12th Conference on Inorganic Polymers (Daijunikai Mukikobunshi Kenkyutoronkai Yoshishu), p. 58, 1993]. However, methods where methyltrichlorosilane is used as a starting material are unknown. Methyltrialkoxy silane is more expensive than methyl trichlorosilane, and synthesis of the above polymer requires strict adjustment of a weight ratio of methyl trimethoxy silane to hydrochloric acid and methyl trimethoxy silane to water. Another problem consists in that the manufacture of the film takes a very long time. Furthermore, the freestanding film described by Abe et al., contains a large residual amount of $OH/OCH_3$ groups so that it is not a completely cured polymethyl silsesquioxane. Moreover, the polymer before curing is a partially hydrolyzate, and therefore it can be assumed that this polymer would be unstable in storage. Japanese Laid-Open Patent Application (Kokai) 3-20331 describes polymethyl silsesquioxane of low molecular weight, i.e., of a number-average molecular weight calculated for polystyrene below 2000. EP No. 0406911A1 also describes a similar compound with an average molecular weight calculated for polystyrene within the range of 6700 to 1,340,000. However, none of the above publications disclose any effect derived from polymethyl silsesquioxane with a low molecular weight within the specified range. Nothing is mentioned in these publications about the content of hydroxyl groups in the product.

As disclosed in a Patent of the same applicant (Canadian Patent No. 0868996, UK Patent No. 1294196, Japanese Laid-Open Patent Application [Kokai] No. 48-101444 (corresponding US Patent No. 3759867), and Japanese Laid-Open Patent Application [Kokai] No. 53-10700 (corresponding US Patent No. 4056492), the content of hydroxyl groups in silicone resins is within the range of 3 to 12 wt.%. However, none of the above publications refers to the molecular weight and therefore nothing is said about the effect of molecular weight with the content of hydroxyl groups on the specific properties of the compound. Furthermore, the aforementioned patent publications have as their object a composition in which a mole ratio of organic groups on silicon to silicon itself is within the range of 1 to 1.8 and which consists mainly of diorganosiloxane units.

Japanese Laid-Open [Kokai] Patent Application No. 50-111198 discloses a synthesis reaction of polymethyl silsesquioxane in a two-layer water system (but not a two-phase system), the reaction being carried out with the use of an oxygen-containing organic solvent, such as ketone. The above patent, however, specifies neither the molecular weight nor the amount of hydroxyl groups. Furthermore, as disclosed in Japanese Examined Patent Publication [Kokoku] 60-17214, polymethyl silsesquioxane was synthesized from methyl trichlorosilane by means of a method described in Japanese Laid-Open Patent Application [Kokai] 50-111198. But the product contained an insoluble gel and an unstable soluble portion which became insoluble 3 days later. Japanese Laid-Open Patent Application [Kokai] No. 3-227321 also describes a reaction in a two-layer system, but it is limited to a system that consists of hydrocarbon solvent in which a specific alcohol is dissolved, and of water in which an alkali-metal carboxylate is dissolved. More than 80% of the product is a portion with a molecular weight within the range of 2000 to 6000, in terms of a number-average molecular weight calculated for polystyrene. However, the number of hydroxyl groups is not specified. Furthermore, the processes described in all aforementioned publications have a special operation requirement which is a necessity for adjusting the rate of stirring required to maintain a two-layer system during the reaction. As disclosed in aforementioned Canadian Patent No. 0868996, UK Patent 1294196, and Japanese Laid-Open Patent Application [Kokai] 48-101444 (corresponding US Patent No. 3759867), halosilane is subjected to hydrolysis and condensation in a system utilizing acetone as a co-solvent in a mixture of water with a water-insoluble organic solvent.

## Disclosure of the Invention

It is an object of the present invention to provide a curable polymethyl silsesquioxane composition required for obtaining a cured material of polymethyl silsesquioxane which possesses properties listed in the following items 1) through 4).

1) Level of flexibility sufficient for using the product as a freestanding film.
2) Free from cracking to the level which may cause technical problems irrespective of the thickness of a film made of a cured product.
3) Excellent physical properties such as tensile strength, etc.
4) Obtaining of a cured material which, when cured under the practical curing conditions, acquires properties mentioned in items 1), 2), and 3).

If polymethyl silsesquioxane is used with characteristics which do not fall into the range prescribed for the curable polymethyl silsesquioxane of the present invention, the properties listed in items 1) through 4) above will not be achieved. In particular, as far as the property of item 3) is concerned, the measurements showed that when the polymethyl silsesquioxane did not fall into the range prescribed for the curable polymethyl silsesquioxane of the present invention, it was difficult to obtain a cured polymethyl silsesquioxane with a tensile strength which can be subjected to measurement.

The present inventors carried out profound studies aimed at the film-forming properties of polymethyl silsesquioxane. The results of these studies showed that if a composition is prepared from a polymethyl silsesquioxane which has a molecular weight within the specified range and a specified number of hydroxyl groups and if it also contains at least one member selected from a cross-linking agent or a catalyst for curing said polymethyl silsesquioxane, it is possible to obtain a cured polymethyl silsesquioxane with a flexibility sufficient for forming a freestanding film. Thus, the authors arrived at the present invention.

More specifically, the present invention provides a curable polymethyl silsesquioxane composition characterized by containing one or more members selected from the group consisting of a curing catalyst and a cross-linking agent, as well as a curable polymethyl silsesquioxane having a number-average molecular weight (M) calibrated against polystyrene within the range of 380 to 2000 and represented by the following formula:

$$[CH_3SiO_{3/2}]_n[CH_3Si(OH)O_{2/2}]_m$$

(where m and n are positive numbers which correspond to said molecular weight, a ratio of m/(m + n) has a value that is within the boundaries of an area limited by the lines represented by the following formulae from (1) to (4), the lines themselves and their intersections being included:

(Formula 1) $m/(m + n) = 0.152/(M \times 10^{-3}) + 0.10$

(Formula 2) $1/(M \times 10^{-3}) = 1{,}000/2{,}000$

(Formula 3) $1/(M \times 10^{-3}) = 1{,}000/380$

(Formula 4) $m/(m + n) = 0.034/(M \times 10^{-3})$).

It becomes possible, due to the use of the curable polymethyl silsesquioxane composition of the present invention, to easily obtain a cured material of polymethyl silsesquioxane with excellent property suitable for curing under practical conditions. Such cured polymethyl silsesquioxane is sufficiently flexible and therefore makes it practically possible to obtain thicker coating films or freestanding films and cured material with heretofore unattainable properties. These products may find wide practical application since they combine in themselves heat-resistant, electrical-insulating, and flame-resistant properties.

Resistance to heat and flexibility of the cured polymethyl silsesquioxane of the present invention are properties which are especially superior to similar properties of cured materials prepared from the conventional silicone resins. These new properties of the polymethyl silsesquioxane of the invention make it possible for use in the fields where the application of conventional silicone materials has been limited.

Brief Description of the Drawing

Fig. 1 is a graph illustrating the area of m, n values defined by the above formulae for cured silsesquioxane of the present invention represented by $[CH_3SiO_{3/2}]_n[CH_3Si(OH)O_{2/2}]_m$.

Description of Preferred Embodiments

The polymethyl silsesquioxane composition of the present invention is a curable composition characterized by containing one or more members selected from the group consisting of a curing catalyst and a cross-linking agent, as well as a curable polymethyl silsesquioxane having a number-average molecular weight (M) calculated for polystyrene not lower than 380, but not higher than 2000 and represented by the following formula:

$$[CH_3SiO_{3/2}]_n[CH_3Si(OH)O_{2/2}]_m$$

(where m and n are positive numbers which give said molecular weight, a ratio of m/(m + n) has a value that is within the boundaries of zone A in Fig. 1 which is a graph having $1/(M \times 10^{-3})$ on the abscissa and m/(m + n) on the ordinate and which defines an area limited by the lines represented by the following formulae from (1) to (4), the lines themselves and their intersections being included:

(Formula 1) $m/(m + n) = 0.152/(M \times 10^{-3}) + 0.10$

(Formula 2) $1/(M \times 10^{-3}) = 1{,}000/2{,}000$

(Formula 3) $1/(M \times 10^{-3}) = 1{,}000/380$

(Formula 4) $m/(m + n) = 0.034/(M \times 10^{-3})$).

This curable polymethyl silsesquioxane makes it possible to obtain a cured polymethyl silsesquioxane with properties described in aforementioned items 1), 2), and 3), under practical conditions.

If, in the curable polymethyl silsesquioxane composition of the invention, the molecular weight of the aforementioned curable polymethyl silsesquioxane is beyond the aforementioned limits, or if the quantity of silanol groups exceeds the aforementioned upper limit, the cured material of polymethyl silsesquioxane obtained from such a curable polymethyl silsesquioxane will not be suitable for the formation of sufficiently flexible film since the material will be subject to cracking, etc. If, on the other hand, the quantity of silanol groups is below the lower limit, the product will not possess sufficient curability.

The aforementioned curable polymethyl silsesquioxane suitable for the present invention is preferably obtained by hydrolyzing a methyltrihalosilane represented by the formula $MeSiX_3$ (where Me is a methyl group and X is a halogen atom selected from F, Cl, Br, and I) and subjecting the product of the hydrolysis to a reaction of condensation in a two-phase system consisting of water and an organic solvent comprising an oxygen-containing organic solvent, and comprising or not comprising a hydrocarbon solvent in an amount of not more than 50 vol.% of said mixture. The composition of the present invention comprising the curable polymethyl silsesquioxane which has been manufactured by such a method and has a molecular weight within the aforementioned range and which has an aforementioned amount of hydroxyl groups, makes it possible to obtain a cured material with sufficiently flexibility and heat-resistance.

The aforementioned curing catalyst may be represented by the following compounds: tin compounds, such as tin diacetate, tin dioctoate, tin dilaurate, tin tetraacetate, dibutyltin diacetate, dibutyltin dioctoate, dibutyltin dilaurate, dibutyltin dioleate, dimethoxydibutyltin, dimetyltin oxide, dibutyltin benzylmaleate, bis (triethoxysiloxy) dibutyltin, diphenyltin diacetate, titanium compounds, such as tetramethoxy titanium, tetraethoxy titanium, tetra-n-propoxy titanium, tetra-i-propoxy titanium, tetra-n-butoxy titanium, tetra-i-butoxy titanium, tetrakis (2-ethyl hexoxy)titanium, di-i-propoxybis (ethylacetoacetate)titanium, dipropoxybis (acetylacetonate)titanium, di-i-propoxybis (acetylacetonate)titanium, dibutoxybis(acetylacetonate) titanium, tri-i-propoxyallyl acetate titanium, titanium isopropoxy octylene glycol, or bis(acetylacetonate)titanium oxide, metallo-aliphatic acid compounds, such as lead diacetate, bis(2-ethylhexanoic acid)lead, lead dineodecanoate, lead tetraacetate, tetrakis (n-propionic acid)lead, zinc diacetate, bis(2-ethylhexanoic acid)zinc, zinc dineodecanoate, zinc diundecenoate, zinc dimethacrylate, iron diacetate, tetrakis (2-ethylhexanoic acid) zirconium, tetrakis (methacrylic acid) zirconium, or cobalt diacetate, or amino group-containing compounds, such as aminopropyl trimethoxy silane, N-(2-aminoethyl)-3-aminopropyl trimethoxy silane, tetramethyl guanidine, tetramethyl guanidylpropyl trimethoxy silane, tetramethyl guanidylpropyl dimethoxy silane, tetraimethyl guanidyl propyl tris (trimethyl siloxane) silane, or 1,8-diazabicyclo [5.4.0.]-7-undecene. It is recommended that the above catalysts be normally contained in an amount of 0.01 to 10 parts by weight, preferably 0.1 to 5 parts by weight, per 100 parts by weight of polymethyl silsesquioxane.

The following are examples of compounds suitable for use as cross-linking agents.

$CH_3Si(OCH_3)_3$ $CH_2{=}CHSi(OCH_3)_3$ $Si(OC_2H_5)_4$

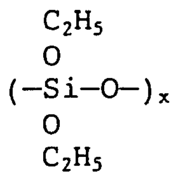

(X is a member having a value of 2 to 50.)

$Si(OCH_2CH_2CH_3)_4$

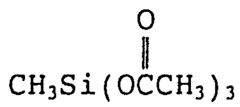

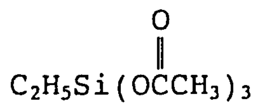

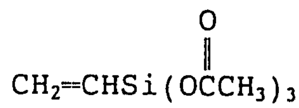

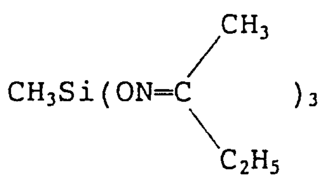

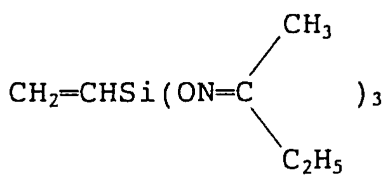

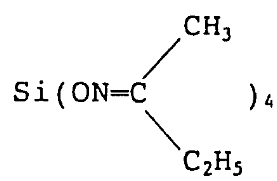

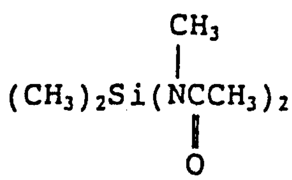

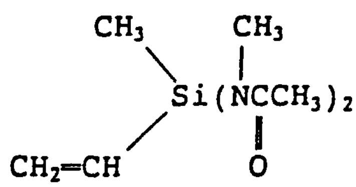

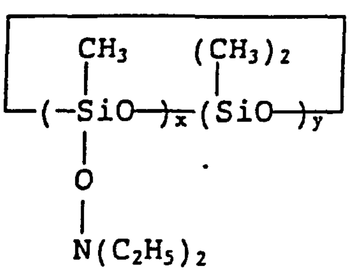

(x/y = 2/2, 3/1)

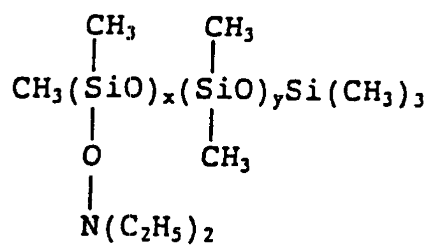

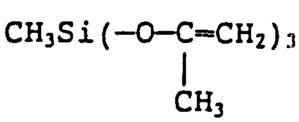

It is recommended that the cross-linking agent be used in an amount of 0.1 to 80 parts by weight, preferably 1 to 70 parts by weight, per 100 parts by weight of polymethyl silsesquioxane. For all catalysts and cross-linking agents, the curing temperature should be within the range of 20 to 350°C, preferably 20 to 250°C. The curing temperature exceeding 350°C may cause decomposition of siloxane.

Apart from the catalyst and closslinking agent, the curable polymethyl silsesquioxane composition of the present invention may contain other additives. Such other additives may be a substance, e.g., for improving surface characteristics of the cured product, adhesive characteristics of the cured product, flowability of the composition, etc.

Since the aforementioned curable polymethyl silsesquioxane used in the present invention is soluble in an organic solvent, the curable polymethyl silsesquioxane composition of the present invention is normally used in an organic-solvent solution.

More specifically, the aforementioned curable polymethyl silsesquioxane composition of the invention can be first dissolved in an organic solvent and then heated after casting performed by evaporating the solvent. However, the curable polymethyl silsesquioxane composition of the invention may be heated and melted.

The following are examples of solvents suitable for dissolving polymethyl silsesquioxane of the present invention: aromatic hydrocarbon solvents, such as benzene, toluene, or xylene, ether-type solvents, such as diethyl ether, or tetrahydrofuran, alcohol-type solvents, such as butanol, or hexanol, ketone-type solvents, such as acetone, methylethyl ketone, methylisobutyl ketone, ester-type solvents, such as ethyl acetate, butyl acetate, or halogenated hydrocarbon solvents, such as chloroform, trichloroethylene, or carbon tetrachloride.

The following description will exemplify a favorable method for synthesis for polymethyl silsesquioxane having the molecular weight within the aforementioned prescribed range of molecular weights and the amount of hydroxyl groups.

(1) A method comprising the steps of: forming a two-phase system consisting of water and a substance selected from (a) an oxygen-containing organic solvent or (b) an oxygen-containing organic solvent in a mixture containing a hydrocarbon solvent incorporated therein in an amount of not more than 50 vol.%; adding dropwise components (A) or (B) given below to the above-mentioned system, hydrolyzing the methyltrihalosilane, and subjecting the product of the hydrolysis to condensation:

(A) a methyltrihalosilane represented by the following formula: $MeSiX_3$ (where Me is a methyl group and X is a halogen atom selected from F, Cl, Br, and I);

(B) a solution obtained by dissolving the aforementioned methyltrihalosilane in (a) an oxygen-containing organic solvent or in (b) a mixture of the oxygen-containing organic solvent containing a hydrocarbon solvent incorporated therein in an amount of not more than 50 vol.%.

(2) The method similar to the one described in Item (1) above, with the exception that the reaction in the two-phase system results from dripping the solution (B) of aforementioned item (1) into only water.

(3) The method similar to the one described in Item (1) above, with the exception that the reaction in the two-phase system results from dripping the solution (B) of aforementioned item (1) and water simultaneously into an empty flask.

Here, X preferably is bromine, chlorine, or, more preferably, chlorine. The phrase "to form a two-phase system consisting of water and an organic solvent" used in this application means that water and an organic solvent are immiscible and do not to form an uniform solution. In this, both a two-layer state of a layer of an organic layer and a water layer produced as a result of a low-speed stirring, and a suspension state produced as a result of intensive stirring are acceptable. Hereinafter, the former will be referred to as "the formation of two layers".

The organic solvent which is suitable for use in the method of the present invention is an oxygen containing solvent which dissolves methyltrihalosilane and is capable of forming a two-phase system with water. The solvent could be partially soluble in water if a two-phase system is still formed, and could further contain less than 50 vol.% of the hydrocarbon solvent. It is impractical to have the content of hydrocarbon solvent above the aforementioned limit, because it may lead to an increase in the amount of gel and to a decrease in the yield of the target product. Japanese Laid-Open Patent Application [Kokai] 3-227321 also mentions that polymethyl silsesquioxane may be obtained in a system prepared by adding a small amount of specified lower alcohol to hydrocarbon solvent. But in this case the reaction is limited to a two-layer system, and it is also mentioned that when alcohol is used in large quantities, the obtained polymethyl silsesquioxane loses stability in storage. In this case alcohol is used as a co-solvent of a hydrocarbon solvent and water. Contrary to this, in the composition of an organic solvent of the present invention, the oxygen-containing solvent constitute a main component of the reaction system, and along with a hydrolysis and condensation reaction on the interface with water, the molecular weight of the product and the quantity of hydroxyl groups can be controlled by solubility, etc., in the organic solvent layer of the product. The mixing of the hydrocarbon solvent is allowed within the limits which do not cause noticeable gelation. Even if the organic solvent of the present invention is miscible with water, it is suitable if the solvent forms a two-phase system with water containing water-soluble inorganic base or a salt of a weak acid having buffering ability.

The following are examples of oxygen-containing solvents suitable for the present invention: ketone-type solvents, such as methyl ethylketone, diethyl ketone, methyl isobutyl ketone, acetyl acetone, or cyclohexanone, ether-type solvents, such as diethyl ether, dinormal-propyl ether, dioxane, diethylene glycol dimethyl ether, or tetrahydrofuran, ester-type solvents, such as ethylacetate, butylacetate, or butylpropionate, alcohol-type solvents, such as n-butanol, or hexanol. The invention, however, is not limited to these examples. Most preferable among the above are ketone, ether, and alcohol-type solvents. These solvents can be used in combinations of two or more. The following are examples of hydrocarbon solvents: aromatic hydrocarbon solvents, such as benzene, toluene, or hexylene, aliphatic hydrocarbon solvents, such as hexane, or heptane, or halogenated hydrocarbon solvents, such as chloroform, trichloroethylene, carbon tetrachloride. However, the invention is not limited to the above examples. There are no special limitations to the amount of organic solvents to be used. It is preferable, however, to use them in an amount of 50 to 2000 parts by weight per 100 parts by weight of methyl trihalosilane. If the organic solvent is contained in an amount less than 50 parts by weight per 100 parts by weight of methyl trihalosilane, the obtained polymethyl silsesquioxane will have insufficient solubility. Under certain circumstances, It would be impossible to obtain polymethyl silsesquioxane with the molecular weight within the desired range, because of an increase in the molecular weight. On the other hand, if the aforementioned amount exceeds 2000 parts by weight, the hydrolysis and condensation of the methyl trihalosilane cannot progress quickly, and therefore it would be impossible to obtain polymethyl silsesquioxane with the molecular weight in the desired range. Also, there are no special limitations to the amount of water which can be used, but 10 to 3000 parts by weight of water per 100 parts by weight of methyl trihalosilane are preferable.

The reaction is still possible even if no said base or salt is added to the aqueous phase at all, but the polymethyl silsesquioxane obtained in this case will have higher molecular weight. This is because the reaction is advanced under the effect of hydrogen chloride obtained from chlorosilane, so that by adding a water-soluble inorganic base which limits the acidity or a salt of a weak acid which possesses buffering properties, it is possible to synthesize polymethyl silsesquioxane with a lower molecular weight. Furthermore, the acidity can be reduced by using amine, but, as described in Japanese Examined Patent Publication [Kokoku] 60-17214, if the method is used, as disclosed in Japanese Laid-Open Patent Application [Kokai] 50-111198, in a two-layer system (but not a two-phase system) consisting of ketone and amine-containing water with synthesis of polymethyl silsesquioxane from methyl trichlorosilane, the obtained product will contain an insoluble gel, and the soluble portion will be unstable and will become insoluble 3 days later.

The following are examples of water-soluble inorganic bases suitable for the invention: water-soluble alkalis, such as lithium hydroxide, sodium hydroxide, potassium hydroxide, calcium hydroxide, or magnesium hydroxide. Salts of weak acids which possess buffering properties may be represented by carbonates, such as sodium carbonate, potassium carbonate, calcium carbonate, or magnesium carbonate, hydrogencarbonate, such as sodium hydrogencarbonate, or potassium hydrogencarbonate, oxalates, such as potassium trihydrogen bis-oxalate, carboxylates, such as potassium hydrogen phthalate, or sodium acetate, phosphates, such as disodium hydrogen phosphate, potassium dihydrogenphosphate, borates, such as sodium tetraborate. The invention, however, is not limited to the above examples. It is recommended that the above bases be used in the amount of not more than 1.8 gram-equivalent quantity per 1 mol of halogen atom in one molecule of trihalosilane. In other words, the amount of said base or salt should be not more than 1.8 times the quantity of the exact amount to neutralize the hydrogen halide produced in the case of complete hydrolysis of halosilane. If the above limit is exceeded, the reaction will be prone to formation of an insoluble gel. The aforementioned water-soluble inorganic bases and salts of weak acids with buffering properties may be used in combination of two or more, provided their total amount is within aforementioned quantitative limits.

In hydrolysis of methyl trihalosilane, the rate of stirring of the reaction solution can be sufficiently low in order to maintain a two-layer system consisting of an aqueous phase and an organic solvent phase. But there is no problem if, as a result of intense stirring, a suspension is formed. It is recommended that the reaction temperature be in the range of 20°C (room temperature) to 120°C, but the most preferable range is from 40°C to 100°C.

Because of impurities contained in the starting material, it is possible that the curable polymethyl silsesquioxane composition of the present invention will comprise some polymethyl silsesquioxane having units with structures different from those specified by the aforementioned first embodiment of the present invention. Examples of such units may be, e.g., units which have lower alkyl groups other than methyl groups, monofunctional groups such as those represented by the following formula: $R_3SiO_{1/2}$, bifunctional groups such as those represented by the following formula: $R_2SiO_{2/2}$ (where R is a lower alkyl), tetra-functional groups such as those represented by the following formula: $SiO_{4/2}$, or the like. The aforementioned curable polymethyl silsesquioxane contains OH groups in the structural formula shown above. But it is possible that said polymethyl silsesquioxane may contain OH groups in structures different from the aforementioned structure in a very small quantity.

The following are preferable embodiments of the present invention.

(Preferable Embodiment 1)

A curable polymethyl silsesquioxane composition comprising at least one of the members selected from a cross-linking agent or a curing catalyst, as well as a curable polymethyl silsesquioxane which has a number-average molecular weight (M) calculated for polystyrene not less than 380 and not more than 1800 and represented by the following general formula:

$$[CH_3SiO_{3/2}]_n[CH_3Si(OH)O_{2/2}]_m$$

where m and n are positive numbers which give aforementioned molecular weight, a ratio of m/(m + n) has a value that is within the boundaries of zone A in Fig. 1.

(Preferable Embodiment 2)

A curable polymethyl silsesquioxane composition according to the Preferable Embodiment 1, wherein said curable polymethyl silsesquioxane is obtained by hydrolyzing a methyltrihalosilane represented by the formula: $MeSiX_3$ (where Me is a methyl group and X is a halogen atom selected from F, Cl, Br and I) and subjecting the product of the hydrolysis to a reaction of condensation in a two-phase system consisting of water and an organic solvent comprising an oxygen-containing organic solvent, and comprising or not comprising a hydrocarbon solvent in an amount not more than 50 vol.% of said mixture.

(Preferable Embodiment 3)

The curable polymethyl silsequioxane composition of aforementioned Preferable Embodiment 1 or 2, wherein the catalyst is a tin-type catalyst.

(Preferable Embodiment 4)

The curable polymethyl silsequioxane composition of aforementioned Preferable Embodiment 1 or 2, wherein the cross-linking agent is a silane compound or an organopolysiloxane having a hydrolyzable group.
The invention will be now described in more detail with reference to the following example and comparative examples which, however, should not be construed as limiting the scope of the present invention.

(Example 1)

A reactor equipped with a refluxing condenser, dropping funnel, and the stirrer was filled with 12.7g (0.12 mol) of sodium carbonate and 80 ml of water. The contents were stirred and combined with 80 ml of methyl isobutyl ketone. The stirring speed was slow enough to keep an organic layer and a water layer. To the mixture was then added slowly dropwise 14.9g (0.1 mol) of methyl trichlorosilane from the dropping funnel over 30 minutes. During the addition, the temperature of the reaction mixture increased to 60°C. The reaction mixture was then heated and stirred for 24 hours on a 60°C oil bath. Upon completion of the reaction, the organic layer was washed until the washing water became neutral, and the organic layer was then dried with the use of a drying agent. After removal of the drying agent, the solvent was evaporated in vacuum, and after drying in a vacuum overnight, a white solid substance of polymethyl silsesquioxane was obtained. The molecular weight distribution of polymethyl silsesquioxane was measured by GPC [manufactured by Tosoh Corporation, Model HLC-8020] (2 columns manufactured by Tosoh Corporation, trademark-TSK gel $GMH_{HR}$-L, with the use of chloroform as a polymer solvent). The analysis showed that the product had a weight-average molecular weight calculated for polystyrene equal to 2700, and number-average molecular weight equal to 870. The amount of hydroxyl groups determined from $^{29}$SiNMR spectrum [manufactured by Bruker, Model ACP-300] was equal to 0.18 per 1 atom of silicon (in this case, 0.18 is a value of m/(m + n) ratio). This polymethyl silsesquioxane was soluble in chloroform, dichloromethane, methylisobutyl ketone, acetone, tetrahydrofuran, etc., and did not change its solubility and molecular weight distribution after 5 months of storage at room temperature in air.
1g of the above polymethyl silsesquioxane was dissolved in 5g of chloroform, and the solution was combined with 5 mg of tin dioctoate. The obtained solution was spread over a glass plate and kept for 2 hours at room temperature. A transparent film formed on the glass was peeled off from the glass and subjected to 10 minutes thermal crosslinking at 100°C. A specimen having the length of 50 mm, the width of 10 mm, and thickness of 280 µm was cut from the obtained freestanding film and tested with regard to the tensile strength. The test was carried out on a universal testing machine Model 4301 manufactured by Instron Company with the stress rate of 20 mm/min. Measurements were carried

out on five specimens. The resulting tensile strength was within the range of 15 to 20 M Pa. Following this, a freestanding film having a thickness of 70 μm was subjected to a bending testing on a bending tester according to JIS K-5400 with bending of the film 180° around a rod having a 2 mm minimum diameter. Fractures and cracks were not revealed after testing. Furthermore, this freestanding film was ground and measured with regard to the thermogravimetry (manufactured by Rigaku Co., Model TG8101D, measurement in air with the heating rate of 10°C/min). The starting weight-decrease temperature was 470°C, the 5% weight-decrease temperature was 523°C.

(Example 2)

Similar to Example 1, an experiment was carried out in a two-layer system consisting of an organic layer and a water layer. However, the sodium carbonate was replaced by 13.5g (0.24 mol) of potassium hydroxide. The reaction was carried out with the use of 80 ml of water, 80 ml of methyl isobutyl ketone, and 14.9g (0.1 mol) of methyl trichlorosilane. As a result, white solid substance of polymethyl silsesquioxane was obtained. A molecular weight distribution of the obtained polymethyl silsesquioxane was analyzed by the same method as in Example 1 and showed a weight-average molecular weight equal to 2150 and a number-average molecular weight equal to 730. The number of hydroxyl groups was 0.22 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air. By the same method as in Example 1, a film was produced from 1g of the polymethyl silsesquioxane. Tensile tests of the film showed the tensile strength between 10 and 11 M Pa. A freestanding film having 70 μm thickness was subjected to a bending test by bending the film 180° around a 2-mm diameter rod. No fracturing or cracking occurred as a result of the bending test.

(Example 3)

Similar to Example 1, an experiment was carried out in a two-layer system consisting of an organic layer and a water layer. However, without the use of base, etc., the reaction was carried out with the use of 80 ml of water, 80 ml of methyl isobutyl ketone, and 14.9g (0.1 mol) of methyltrichlorosilane. As a result, white solid substance of polymethyl silsesquioxane was obtained. A molecular weight distribution of the obtained polymetyl silsesquioxane was analyzed by the same method as in Example 1 and showed a weight-average molecular weight equal to 6520 and a number-average molecular weight equal to 1180. The number of hydroxyl groups was 0.15 per 1 atom of silicon. This polymethyl silsesquioxane was soluble in chloroform, dichloromethane, methyl isobutyl ketone, acetone, tetrahydrofuran, etc., and did not change it solubility and molecular weight distribution after 5 months of storage at room temperature in air.

By the same method as in Example 1, a film was produced from 1g of the polymethyl silsesquioxane. Tensile tests of the film showed the tensile strength between 16 and 19 M Pa. A freestanding film 70 μm thick was subjected to a bending test by bending the film 180° around a 2-mm diameter rod. No fracturing or cracking occurred as a result of the bending test.

(Example 4)

The reaction procedure was the same as in Example 1, and the reaction was carried out with the use of 12.7g (0.12 mol) of sodium carbonate, 80 ml of water, 80 ml of methyl isobutyl ketone and 14.9g (0.1 mol) of methyl trichlorosilane. However, the reaction was carried out under conditions of vigorous stirring, without formation of the two-layer system consisting of an organic phase and an aqueous phase. As a result, white solid substance of polymethyl silsesquioxane was obtained. A molecular weight distribution of the obtained polymethyl silsesquioxane was analyzed by the same method as in Example 1 and showed a weight-average molecular weight equal to 950 and a number-average molecular weight equal to 560. The number of hydroxyl groups was 0.23 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane. Tensile tests of the film showed the tensile strength between 15 and 19 M Pa. A freestanding film 70 μm thick was subjected to a bending test by bending the film 180° around a 2-mm diameter rod. No fracturing or cracking occurred as a result of the bending test.

Furthermore, this freestanding film was ground and measured with regard to the thermogravitation loss in a manner similar to that of Example 1. The starting weight-decrease temperature was 478°C, the 5% weight-decrease temperature was 519°C.

(Example 5)

The experiment was carried out similar to Example 1. However, the reaction was carried out with the use of 80 ml tetrahydrofuran as an organic solvent, 12.7g (0.12 mol) of sodium carbonate, 80 mol of water, and 14.9g (0.1 mol) of methyl trichlorosilane. As a result, a white solid substance of polymethyl silsesquioxane was obtained. Two layers, i.e. an organic layer and a water layer were formed similar to the experiment of Example 1. A molecular weight distribution of the obtained polymethyl silsesquioxane was analyzed by the same method as in Example 1 and showed a weight-average molecular weight equal to 5740 and a number-average molecular weight equal to 890. The number of hydroxyl groups was 0.15 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane. Tensile tests of the film showed the tensile strength between 15 and 21 M Pa. A freestanding film 70 μm thick was subjected to a bending test by bending the film 180° around a 2-mm diameter rod. No fracturing or cracking occurred as a result of the bending test.

(Example 6)

Similar to Example 1, a two-layer reaction system with an organic layer and an aqueous layer was formed. However, the reaction was carried out with the use of 80 ml of 1-butanol as an organic solvent, 12.7g (0.12 mol) of sodium carbonate, 80 ml of water, 14.9g (0.1 mol) of methyl trichlorosilane. After adding the chlorosilane by dripping, the reaction was carried out for 2 hours at 30°C. As a result, white solid substance of polymethyl silsesquioxane was obtained. A molecular weight distribution of the obtained polymethyl silsesquioxane was analyzed by the same method as in Example 1 and showed a weight-average molecular weight equal to 770 and a number-average molecular weight equal to 570. The number of hydroxyl groups was 0.28 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane. Tensile tests of the film showed the tensile strength between 14 and 17 M Pa. A freestanding film 70 μm thick was subjected to a bending test by bending the film 180° around a 2-mm diameter rod. No fracturing or cracking occurred as a result of the bending test.

(Example 7)

Similar to Example 4, the reaction was carried out with high-speed stirring without formation of two layers consisting of a water phase and an organic phase. A mixture consisting of 12.7g (0.12 mol) of sodium carbonate, 80 ml of water, and 60 ml of methyl isobutyl ketone was prepared in a reactor. The mixture was then combined with a solution which was formed by dissolving 14.9g (0.1 mol) of methyl trichlorosilane in 20 ml of methyl isobutyl ketone and which was added by dripping. As a result, a white solid substance of polymethyl silsesquioxane was obtained. A molecular weight distribution of the obtained polymethyl silsesquioxane was analyzed by the same method as in Example 1 and showed a weight-average molecular weight equal to 580 and a number-average molecular weight equal to 500. The number of hydroxyl groups was 0.29 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was prepared from 1g of the polymethyl silsesquioxane using a catalytic quantity of 12 mg. Tensile test of the film showed that the tensile strength was between 7 and 13 M Pa. Similar to Example 1, a freestanding film having 70 μm thickness was subjected to a bending test by bending the film 180° around a 2-mm diameter rod. No fracturing or cracking occurred as a result of the bending test.

(Example 8)

Similar to Example 4, the reaction was carried out with high-speed stirring without formation of two layers consisting of a water phase and an organic phase. The reactor was first loaded only with an aqueous solution formed by dissolving 12.7g (0.12 mol) of sodium carbonate, 80 ml of water, and then the solution was combined with the solution of 14.9g (0.1 mol) of methyl trichlorosilane dissolved in 80 ml of methyl isobutyl ketone added by dripping. And then the reaction was carried out in the same manner as in Example 1, whereby white solid substance of polymethyl silsesquioxane was obtained. A molecular weight distribution of the obtained polymethyl silsesquioxane was analyzed by the same method as in Example 1 and showed a weight-average molecular weight equal to 690 and a number-average molecular weight equal to 540. The number of hydroxyl groups was 0.25 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was prepared from 1g of the polymethyl silsesquioxane using a catalytic quantity of 12 mg. Tensile test of the film showed that the tensile strength was between 11 and 20 M Pa. Similar to Example 1, a freestanding film having 70 μm thickness was subjected to a bending test by bending the film 180° around a 2-mm diameter rod. No fracturing or cracking occurred as a result of the bending test.

(Example 9)

Similar to Example 8, the reaction was carried out with high-speed stirring without formation of two layers consisting of a water phase and an organic: phase. However, without the use of sodium carbonate, only 80 ml of water were loaded in the reactor under conditions of conditions of vigorous stirring, and then the contents of the reactor was combined with 14.9g (0.1 mol) of the solution of methyl trichlorosilane dissolved in 80 ml of methyl isobutyl ketone added by dripping. As a result, a white solid substance of polymethyl silsesquioxane was obtained. A molecular weight distribution of the obtained polymethyl silsesquioxane was analyzed by the same method as in Example 1 and showed a weight-average molecular weight equal to 850 and a number-average molecular weight equal to 600. The number of hydroxyl groups was 0.23 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was prepared from 1g of the polymethyl silsesquioxane using a catalytic quantity of 12 mg. Tensile test of the film showed that the tensile strength was between 15 and 18 M Pa. Similar to Example 1, a freestanding film 70 μm thick was subjected to a bending test by bending the film 180° around a 2-mm diameter rod. No fracturing or cracking occurred as a result of the bending test.

(Example 10)

Similar to Example 1, the experiment was carried out in a two-layer system consisting of an organic layer and a water layer, and the reaction was carried out with the use of 15.9g (0.15 mol) of sodium carbonate, 80 ml of water, 80 ml of methyl isobutyl ketone and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 2090 and a number-average molecular weight equal to 860. The number of hydroxyl groups was 0.19 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane. Tensile tests of the film showed the tensile strength between 14 and 16 M Pa. A freestanding film having 70 μm thickness was subjected to a bending test by bending the film 180° around a 2-mm diameter rod. No. fracturing or cracking occurred as a result of the bending test.

(Example 11)

Similar to Example 1, the experiment was carried out in a two-layer system consisting of an organic layer and a water layer, and the reaction was carried out with the use of 19.1g (0.18 mol) of sodium carbonate, 80 ml of water, 80 ml of methyl isobutyl ketone, and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 2470 and a number-average molecular weight equal to 890. The number of hydroxyl groups was 0.19 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane similar to the method of Example 1 using 12 mg of catalytic quantity. Tensile tests of the film showed the tensile strength between 17 and 20 M Pa. A freestanding film 70 μm thick was subjected to a bending test by bending the film 180° around a 2-mm diameter rod. No fracturing or cracking occurred as a result of the bending test.

(Example 12)

Similar to Example 1, the experiment was carried out in a two-layer system consisting of an organic layer and a water layer, and the reaction was carried out with the use of 80 ml, of water, 80 ml of methyl isobutyl ketone and 14.9g (0.1 mol) of methyl trichlorosilane. However, sodium carbonate was used in an amount of 3.18g (0.03 mol). The reaction was carried out at 90°C for 24 hours. As a result, a white solid substance of polymethyl silsesquioxane was obtained. A molecular weight distribution of the obtained polymethyl silsesquioxane was analyzed by the same method as in Example 1 and showed a weight-average molecular weight equal to 13360 and a number-average molecular weight equal to 1350. The number of hydroxyl groups was 0.14 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane using 12 mg of catalytic quantity. Tensile tests of the film showed the tensile strength between 16 and 18 M Pa. A freestanding film 70 μm thick was subjected to a bending test by bending the film 180° around a 2-mm diameter rod. No fracturing or cracking occurred as a result of the bending test.

(Example 13)

Similar to Example 1, the experiment was carried out in a two-layer system consisting of 64 ml of methyl isobutyl ketone and 16 ml of toluene. Other components used in the reaction were 12.7g (0.12 mol) of sodium carbonate, 80 ml of water, and 14.9g (0.1 mol) of methyl trichlorosilane. After adding chlorosilane by dripping, the reaction was continued for 2 hours at 30°C. As a result, white solid substance of polymethyl silsesquioxane was obtained. A molecular weight distribution of the obtained polymethyl silsesquioxane was analyzed by the same method as in Example 1 and showed a weight-average molecular weight equal to 2970 and a number-average molecular weight equal to 930. The number of hydroxyl groups was 0.20 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 5 months of storage at room temperature in air.

By the same method as in Example 1, a film was produced from 1g of the polymethyl silsesquioxane. Tensile tests of the film showed the tensile strength between 19 and 21 M Pa. A freestanding film 70 μm thick was subjected to a bending test by bending the film 180° around a 2-mm diameter rod. No fracturing or cracking occurred as a result of the bending test.

(Example 14)

A cured film obtained in Example 1 was subjected to heating and crosslinking, first at 100°C during 1 hour and then at 250°C during 3 days. This completely cured film obtained by this method was also able to be subjected to tensile strength testing and remained sufficiently flexible. Tensile tests of the film showed that the tensile strength was between 8 and 10 M Pa. A freestanding film 70 μm thick was subjected to a bending test by bending the film 180° around a 4-mm diameter rod, and no fracturing or cracking occurred as a result of the bending test. Cracks were also not found when a similar test was conducted by bending the film by 100° around a 2-mm diameter rod.

(Example 15)

1g of polymethyl silsesquioxane obtained in Example 1 was dissolved in 5g of chloroform, and then a film was formed in the same manner as in Example 1, with the exception that 22 mg of dibutyl tin dilaurate were used as a catalyst instead of tin dioctoate. Similar to Example 1, a film was produced and then subjected to tensile strength testing. Tensile tests of the film showed that the tensile strength was between 9 and 13 M Pa. A freestanding film 70 μm thick was subjected to a bending test by bending the film 180° around a 2-mm diameter rod, and no fracturing or cracking occurred as a result of the bending test.

(Example 16)

1g of polymethyl silsesquioxane obtained in Example 1 was dissolved in 5g of chloroform, and then a film was formed in the same manner as in Example 1, with the exception that 22 mg of dibutyl tin diacetate were used as a catalyst instead of tin dioctoate. Similar to Example 1, a film was produced and subjected to tensile strength testing which showed that the tensile strength was between 11 and 19 M Pa. Similar to Example 1, a freestanding film 70 μm thick was subjected to a bending test by bending the film 180° around a 2-mm diameter rod, and no fracturing or cracking occurred as a result of the bending test.

(Example 17)

1g of polymethyl silsesquioxane obtained in Example 1 was dissolved in 4.5g of chloroform. The solution was then combined with 445 mg of a cross-linking agent in the form of methyl tris (ethylmethylketoxyme)silane and a catalyst in the form of 22 mg of dibutyltin diacetate. The solution was stirred for 5 min in an atmosphere of an inert gas. The obtained solution was then spread over the surface of a glass plate, kept intact for 1 hour, and a transparent film obtained by this method was peeled off from the glass plate. The film had a thickness of about 400 µm and had as tensile strength within the range of 13 to 18 M Pa.

(Example 18)

2.5 of polymethyl silsesquioxane obtained in Example 1 were dissolved in 2.5g of chloroform. The solution was combined with 25 mg of tin dioctylate, and the obtained solution was poured into a metal mold and retained intact for 2 days at room temperature. As a result, a solid body having width and thickness of 4 mm and a length of 4.5 cm was obtained. The obtained solid body was subjected to three-point bending tests on a universal material tester (manufactured by Instron Company., Model 4301) with the testing speed of 20 mm/min and in accordance with JIS K-7203. The results showed that the flexural modulus and strength were equal to 500 and 16 M Pa, respectively.

(Example 19)

A reactor equipped with a refluxing condenser, two dropping funnels, and a stirrer was prepared for this test. Then a liquid mixture of 40 ml of methyl isobutyl ketone and 14.9g (0.1 mol) of methyl trichlorosilane was added by dripping via one of the dropping funnels while 40 ml of water were introduced by dripping simultaneously via the other dropping funnel into the aforementioned empty reactor which was cooled on an ice bath. The contents were vigorously stirred so as to prevent the formation of two layers. Ten minutes later the dripping was finished and the reaction mixture was then heated and stirred during 2 hours on a 50°C oil bath. Upon completion of the reaction, the reaction product was treated in accordance with the same procedure as in Example 1. As a result, a solid white substance of polymethyl silsesquioxane was obtained. The molecular-weight distribution of the obtained of polymethyl silsesquioxane was measured in accordance with the same procedure as in Example 1 and had a weight-average molecular weight equal to 1320 and a number-average molecular weight equal to 600. The amount of hydroxyl groups was equal to 0.24 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 6 months of storage at room temperature in air.

A film was formed from the obtained polymethyl silsesquioxane in the same manner as in Example 1, and the film was tested with regard to the tensile strength. The test showed that the tensile strength of the film was within the range of 13 to 15 M Pa. Similar to the procedure of Example 1, a freestanding film 70 µm thick was subjected to a bending with bending of the film 180° around a rod having a 2 mm diameter. Fractures and cracks were not revealed after testing. Furthermore, similar to the case of Example 1, this freestanding film was ground and measured with regard to the thermogravitation loss. The starting weight-decrease temperature was 460°C, the 5% weight-decrease temperature was 511°C.

(Example 20)

A reactor and reaction system with the same additional equipment which was used in Example Addition 1 was utilized in this test. However, the stirrer was rotated at a low speed that allowed separation of the mixture into an organic layer and a layer of water. Upon completion of the dripping, the contents were heated and stirred during 4 hours on a 50°C oil bath. Upon completion of the reaction, the reaction product was treated in accordance with the same procedure as in Example 1. As a result, a solid white substance of polymethyl silsesquioxane was obtained. The molecular-weight distribution of the obtained polymethyl silsesquioxane was measured in accordance with the same procedure as in Example 1 and had a weight-average molecular weight equal to 1830 and a number-average molecular weight equal to 670. The amount of hydroxyl groups was equal to 0.22 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 6 months of storage at room temperature in air.

A film was formed from the obtained polymethyl silsesquioxane in the same manner as in Example 1, and the film was tested with regard to the tensile strength. The test showed that the tensile strength of the film was within the range of 11 to 16 M Pa.

Similar to the procedure of Example 1, a freestanding film having a thickness of 70 µm was subjected to a bending with bending of the film 180° around a rod 2 mm in diameter. Fractures and cracks were not revealed after

testing.

(Comparative Example 1)

The reaction was carried out by the same method as in Example 1 with the use of 31.8g (0.3 mol) of sodium carbonate, 80 ml of water, 80 ml of methyl isobutyl ketone, and 14.9g (0.1 mol) of methyl trichlorosilane. As a result, a white solid containing an insoluble gel was obtained.

(Comparative Example 2)

The reaction was carried out by the same method as in Example 2 with the use of 33.7g (0.6 mol) of potassium hydroxide, 80 ml of water, 80 ml of methyl isobutyl ketone, and 14.9g (0.1 mol) of methyl trichlorosilane. As a result, a white solid body containing an insoluble gel was obtained.

(Comparative Example 3)

The process was carried out similar to Example 1. However, the dripping of chlorosilane was carried out on an ice bath, and the reaction was carried out for 1 hour at 0°C. The obtained polymethyl silsesquioxane had the weight-average molecular weight equal to 350 and the number-average molecular weight equal to 320. The quantity of hydroxyl groups was 0.33 per 1 atom of silicon.

A film was produced from 1g of the obtained polymethyl silsesquioxane by the same method as in Example 1. The film had cracks, and it was impossible to form a freestanding film.

(Comparative Example 4)

The process was carried out similar to Example 13, with the exception that the reaction was conducted with an organic solvent comprising a mixture of 16 ml of methyl isobutyl ketone and 64 ml of toluene, the other components being 12.7g (0.12 mol) of sodium carbonate, 80 ml of water, and 14.9g (0.1 mol) of methyl trichlorosilane. After adding the chlorosilane by dripping the reaction was conducted for 1 hour at 30°C, but the formation of gel occurred. The resulting white solid body of polymethyl silsesquioxane was obtained with a yield of only 25%. A molecular weight distribution of the obtained polymethyl silsesquioxane was analyzed by the same method as in Example 1 and showed a weight-average molecular weight equal to 2740 and a number-average molecular weight equal to 670. The number of hydroxyl groups was 0.35 per 1 atom of silicon.

By the same method as in Example 1, a film was produced from 1g of the polymethyl silsesquioxane. The film had cracks and could not be produced independently.

(Comparative Example 5)

In accordance with the procedure of Example 1 of Japanese Examined Patent Publication [Kokoku] 60-17214, a mixed solvent was prepared by mixing 50 ml of methyl isobutyl ketone and 50 ml of tetrahydrofuran. This mixed solvent was combined with 14.9g (0.1 mol) of methyl trichlorosilane and 4.8g (0.047 mol) of triethylamine. The obtained uniform homogenous solution was further combined with 16.7g of water added by dripping on an ice bath. The reaction mixture was then heated and stirred for 4 hours on an oil bath at 100°C. The reaction mixture was treated in the same manner as in Example 1 whereby a soluble high-molecular weigt polymethyl silsesquioxane was synthesized with a weight-average molecular weight equal to 59100 and a number-average molecular weight equal to 5010. The number of hydroxyl groups was 0.16 per 1 atom of silicon.

By the same method as in Example 1, a film was produced from 1g of the polymethyl silsesquioxane. The film had cracks and could not be produced in a freestanding film.

Furthermore, this cured material was ground and measured with regard to the thermogravitation loss as in Example 1. The starting weight-decrease temperature was 407°C, the 5% weight-decrease temperature was 471°C. The cured product had thermal stability inferior to that of the cured products of the Examples.

(Comparative Example 6)

The procedure was the same as in Comparative Example 5, but the reaction was carried out with 200 ml of methyl isobutyl ketone as a solvent, 14.9g (0.1 mol) of methyl trichlorosilane, 15.2g (0.15 mol) of triethylamine and 5.4g of water. After adding water by dripping, the reaction was carried out for 1 hour at 0°C whereby polymetyl silsesquioxane was synthesized with a weight-average molecular weight equal to 650 and a number-average molecular weight

equal to 480. The number of hydroxyl groups was 0.44 per 1 atom of silicon. By the same method as in Example 1, a film was produced from 1g of the polymethyl silsesquioxane. The film had cracks and could not form a freestanding film.

(Comparative Example 7)

The procedure was the same as in Comparative Example 5, but the reaction was carried out with 200 ml of methyl isobutyl ketone as a solvent, 14.9g (0.1 mol) of methyl trichlorosilane, 10.1g (0.1 mol) of triethylamine, and 5.4g of water. After adding water by dripping, the reaction was carried out for 2 hours at 20°C whereby a polymethyl silsesquioxane was synthesized with a weight-average molecular weight equal to 3520 and a number-average molecular weight equal to 950. The number of hydroxyl groups was 0.29 per 1 atom of silicon. By the same method as in Example 1, a film was produced from 1g of polymethyl silsesquioxane. The film had cracks and could not form a freestanding film.

(Comparative Example 8)

The process was carried out in the same manner as in Example 1, with the exception that 80 ml of tetrahydrofuran were used as a solvent instead of methyl isobutyl ketone and that a base, etc., were not used. The reaction system formed a uniform solution and resulted in gelation.

(Comparative Example 9 )

The process was carried out in the same manner as in Example 1, with the exception that 80 ml of toluene were used as a solvent instead of methyl isobutyl ketone and that a base, etc., were not used. Furthermore, similar to Example 1, the reaction system contained 12.7g (0.12 mol) of sodium carbonate, 80 ml of water, and 14.9g (0.1 mol) of methyl trichlorosilane. The reaction system resulted in gelation.

(Comparative Example 10)

A polymethyl silsesquioxane was prepared in accordance with the procedure described in the literature (S. Nakahama et al., Contemp. Top. Polym. Sci., 1984, Vol. 4, P. 105; Y. Abe et al. J. Polym. Sci. Part A polym. Chem., 1995, vol. 33, p. 751. etc.) by subjecting methyl trimethoxysilane to hydrolysis and condensation with the use of a hydrochloric acid. The obtained polymethyl silsesquioxane was analyzed with regard to the molecular-weight distribution in the same manner as in Example 1. The results showed that a weight-average molecular weight was equal to 2150 and a number-average molecular weight was equal to 660. The obtained polymethyl silsesquioxane contained hydroxyl groups and methoxy groups. The number of hydroxyl groups and methoxy groups determined from $^{29}$Si NMR spectrum and $^{1}$H NMR spectrum was 0.216 and 0.057 per 1 atom of silicon, respectively.

A film was prepared from the obtained polymethyl silsesquioxane by the same method as in Example 1. The obtained freestanding film was free of cracks. However, the film could not easily with stand the bending test with 180° bending over a 10 mm diameter rod. The tensile strength also was low, i.e., from 2 to 6 MPa. Furthermore, this freestanding film was ground and measured with regard to the thermogravitation loss. The starting weight-decrease temperature was 348°C, the 5% weight-decrease temperature was 469°C. The cured product had thermal stability inferior to that of the cured products of the Examples.

Possible Areas of Industrial Application

In a cured state the cured polymethyl silsesquioxane composition of the present invention has excellent physical and chemical properties and therefore is suitable for application onto surfaces of various materials in the form of protective and a heat-resistant coatings.

## Claims

1. A curable polymethyl silsesquioxane composition **characterized by** containing (1) one or more members selected from a curing catalyst or a cross-linking agent, and (2) a curable polymethyl silsesquioxane having a number-average molecular weight (M) calibrated against polystyrene within the range of 380 to 2000 and represented by the following formula:

$$[CH_3SiO_{3/2}]_n[CH_3Si(OH)O_{2/2}]_m$$

(where m and n are positive numbers which give said molecular weight, the ratio of m/(m+n) has a value that is within the boundaries of an area limited by the lines represented by the following formulae from (1) to (4), the lines themselves and their intersections being included:

(Formula 1) $m/(m + n) = 0.152/(M \times 10^{-3}) + 0.10$

(Formula 2) $1/(M \times 10^{-3}) = 1,000/2,000$

(Formula 3) $1/(M \times 10^{-3}) = 1,000/380$

(Formula 4) $m/(m + n) = 0.034/(M \times 10^{-3})$).

2. The composition of Claim 1, wherein the curing catalyst is at least one of the compounds selected from the group consisting of tin diacetate, tin dioctoate, tin dilaurate, tin tetraacetate, dibutyltin diacetate, dibutyltin dioctoate, dibutyltin dilaurate, dibutyltin dioleate, dimethoxydibutyltin, dimethyltin oxide, dibutyltin benzylmaleate, bis (triethoxysiloxy) dibutyltin, diphenyltin diacetate; tetramethoxy titanium, tetraethoxy titanium, tetra-n-propoxy titanium, tetra-i-propoxy titanium, tetra-n-butoxy titanium, tetra-i-butoxy titanium, tetrakis (2-ethylhexoxy) titanium, di-i-propoxybis(ethylacetoacetate) titanium, dipropoxybis(acetylacetonate) titanium, di-i-propoxybis(acetylacetonate) titanium, dibutoxybis(acetylacetonate) titanium, tri-i-propoxyallyl acetate titanium, titanium isopropoxy octylene glycol, bis (acetylacetonate) titanium oxide; lead diacetate, bis (2-ethylhexanic acid) lead, lead dineodecanoate, tetrakis(n-propionic acid) lead, zinc diacetate, bis(2-ethylhexanoic acid) zinc, zinc dineodecanoate, zinc diundecenoate, zinc dimethacrylate, iron diacetate, tetrakis(2-ethylhexanoic acid) zirconium, tetrakis(methacrylic acid) zirconium, cobalt diacetate; aminopropyl trimethoxy silane, N-(2-aminoethyl)-3-aminopropyl trimethoxy silane, tetramethyl guanidine, tetramethyl guanidylpropyl trimethoxy silane, tetramethyl guanidylpropyl dimethoxy silane, tetramethyl guanidylpropyl tris(trimethyl siloxane) silane, and 1,8-diazabicyclo [5.4.0.]-7-undecene.

3. The composition of Claim 2, wherein the curing catalyst is contained in an amount of 0.01 to 10 parts by weight per 100 parts by weight of polymethyl silsesquioxane.

4. The composition of Claim 3, wherein the curing catalyst is contained in an amount of 0.1 to 5 parts by weight per 100 parts by weight of polymethyl silsesquioxane.

5. The composition of Claim 1, wherein the cross-linking agent is at least one compound represented by the following formulae:

$CH_3Si(OCH_3)_3$ $CH_2{=}CHSi(OCH_3)_3$ $Si(OC_2H_5)_4$

$C_2H_5$
O
$(-Si-O-)_x$
O
$C_2H_5$

$Si(OCH_2CH_2CH_3)_4$

(X is a member having a value of 2 to 50.)

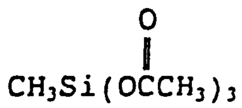
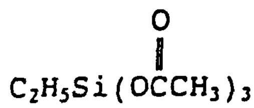
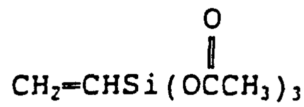

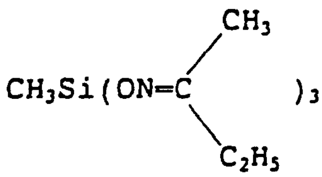
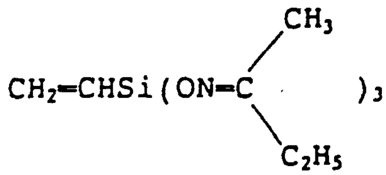
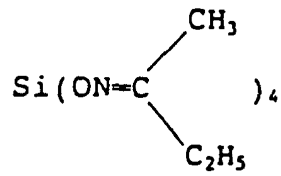

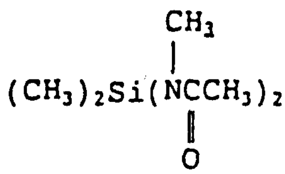
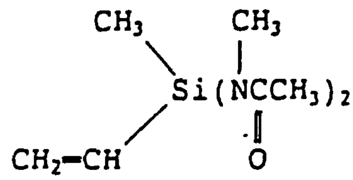

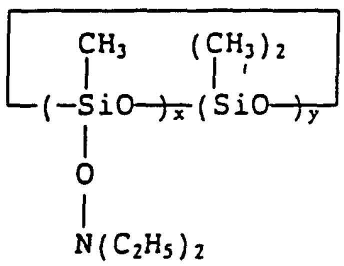
(x/y = 2/2, 3/1)
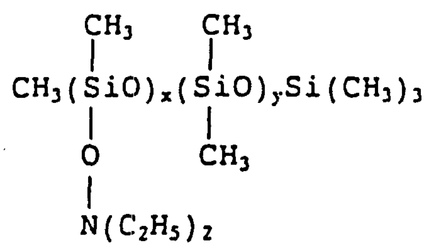

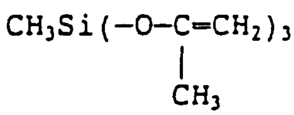

**6.** The composition of Claim 5, wherein the cross-linking agent is contained in an amount of 0.1 to 80 parts by weight per 100 parts by weight of the polymethyl silsesquioxane.

**7.** The composition of Claim 6, wherein said cross-linking agent is contained in an amount of 1 to 70 parts by weight per 100 parts by weight of said polymethyl silsesquioxane.

**8.** The curable polymethyl silsesquioxane composition of anyone Claims 1, 2 or 5, wherein the curable polymethyl silsesquioxane is obtained by hydrolyzing a methyltrihalosilane represented by the following formula $MeSiX_3$ (where Me is a methyl group and X is halogen atom selected from F, Cl, Br, and I) and subjecting the product of the hydrolysis to a reaction of condensation in a two-phase system consisting of water and a substance selected from (a) an oxygen-containing organic solvent or (b) an oxygen-containing organic solvent in a mixture containing a hydrocarbon solvent incorporated therein in an amount of not more than 50 vol.%.

**9.** The composition of anyone Claims 1, 2 or 3, wherein the average molecular weight (M) calculated for polystyrene is within the range of 380 to 1800.

**10.** The curable polymethyl silsesquioxane composition of Claim 8, wherein the curable polymethyl silsesquioxane is obtained by adding dropwise components (A) or (B) given below to a two-phase system given below, prior to said hydrolysis and condensation reaction step:

(A) the methyltrihalosilane

(B) a solution obtained by dissolving the aforementioned methyltrihalosilane in (a) an oxygen-containing organic solvent or in (b) a mixture of the oxygen-containing organic solvent containing a hydrocarbon solvent incorporated therein in an amount of not more than 50 vol.%.

**11.** The curable polymethyl silsesquioxane composition of Claim 8, wherein the curable polymethyl silsesquioxane is obtained by adding dropwise only to water a solution prepared by dissolving the methyl trihalosilane in (a) an oxygen-containing organic solvent or (b) an oxygen-containing organic solvent in a mixture containing a hydrocarbon solvent incorporated therein in an amount of not more than 50 vol.%, prior to said hydrolysis and condensation reaction step.

**12.** The curable polymethyl silsesquioxane composition of Claim 8, wherein the curable polymethyl silsesquioxane is obtained by simultaneously adding dropwise, into an empty reactor, water and a solution prepared by dissolving the methyltrihalosilane in (a) an oxygen-containing organic solvent or (b) an oxygen-containing organic solvent in a mixture containing a hydrocarbon solvent incorporated therein in an amount of not more than 50 vol.%, prior to said hydrolysis and condensation reaction step.

**13.** The curable polymethyl silsesquioxane composition of Claim 8, wherein the curable polymethyl silsesquioxane is obtained by hydrolyzing a methyl trihalosilane and then subjecting the product of hydrolysis to a condensation reaction with the use of a two-phase system that consists of water and (a) an oxygen-containing organic solvent or (b) an oxygen-containing organic solvent in a mixture containing a hydrocarbon solvent incorporated therein in an amount of not more than 50 vol.%.

**14.** The composition of Claim 8, wherein the average molecular weight (M) calculated for polystyrene is within the range of 380 to 1800.

**Patentansprüche**

**1.** Härtbare Polymethyl-silsesquioxan-Zusammensetzung, **dadurch gekennzeichnet, dass** sie enthält

(1) einen oder mehr Vertreter, ausgewählt aus einem Härtungskatalysator oder einem Vernetzungsmittel und
(2) ein härtbares Polymethyl-silsesquioxan mit einem zahlendurchschnittlichen Molekulargewicht (M),geeicht mit Polystyrol, innerhalb des Bereiches von 380 bis 2000 und dargestellt durch die folgende Formel:

$$[CH_3SiO_{3/2}]_n[CH_3Si(OH)O_{2/2}]_m$$

worin m und n positive Zahlen bedeuten, die das genannte Molekulargewicht ergeben, wobei das Verhältnis m/(m+n) einen Wert hat, der innerhalb der Grenzen einer Fläche liegt, die durch Linien begrenzt ist, die den folgenden Formeln (1) bis (4) entsprechen, wobei die Linien selbst und ihre Überkreuzungen eingeschlossen sind:

(Formel 1) $m/(m + n) = 0{,}152/(M \times 10^{-3}) + 0{,}10$

(Formel 2) $1/(M \times 10^{-3}) = 1000/2000$

(Formel 3) $1/(M \times 10^{-3}) = 1000/380$

(Formel 4) $m/(m + n) = 0{,}034/(M \times 10^{-3})$.

**2.** Zusammensetzung nach Anspruch 1, worin der Härtungskatalysator mindestens eine der Verbindungen darstellt, die ausgewählt sind aus der Gruppe, die besteht aus Zinndiacetat, Zinndioctoat, Zinndilaurat, Zinntetraacetat, Dibutylzinndiacetat, Dibutylzinndioctoat, Dibutylzinndilaurat, Dibutylzinndioleat, Dimethoxydibutylzinn, Dimethylzinnoxid, Dibutylzinnbenzylmaleat, Bis(triethoxysiloxy)dibutylzinn, Diphenylzinndiacetat; Tetramethoxytitan, Tetraethoxytitan, Tetra-n-propoxytitan, Tetra-i-propoxytitan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)titan, Di-i-propoxy-bis-(acetylacetonat)titan, Dibutoxy-bis-(acetylacetonat)titan, Tri-i-propoxyallylacetattitan, Titanisopropoxyoctylenglycol, Bis(acetylacetonat)titanoxid; Bleidiacetat, Bis(2-ethylhexansäure)blei, Bleidineodecanoat, Tetrakis-(n-propionsäure)blei, Zinkdiacetat, Bis(2-ethylhexansäure)zink, Zinkdineodecanoat, Zinkdiundecenoat, Zinkdimethacrylat, Eisendiacetat, Tetrakis-(2-ethylhexansäure)zirkonium, Tetrakis-(methacrylsäure)zirkonium, Kobaltdiacetat; Aminopropyltrimethoxysilan, N-(2-Aminoethyl)-3-aminopropyltrimethoxysilan, Tetramethylguanidin, Tetramethylguanidylpropyl-trimethoxysilan, Tetramethylguanidylpropyl-dimethoxysilan, Tetramethylguanidylpropyl-tris(trimethylsiloxan)silan und 1,8-Diazabicyclo[5.4.0.]-7-undecen.

**3.** Zusammensetzung nach Anspruch 2, in der der Härtungskatalysator in einer Menge von 0,01 bis 10 Gew.-Teilen auf 100 Gew.-Teile Polymethylsilsesquioxan enthalten ist.

**4.** Zusammensetzung nach Anspruch 3, in der der Härtungskatalysator in einer Menge von 0,1 bis 5 Gew.-Teilen auf 100 Gew.-Teile Polymethyl-silsesquioxan enthalten ist.

**5.** Zusammensetzung nach Anspruch 1, worin das Vemetzungsmittel mindestens eine Verbindung, dargestellt durch die folgenden Formeln, ist:

$CH_3Si(OCH_3)_3$ $CH_2{=}CHSi(OCH_3)_3$ $Si(OC_2H_5)_4$

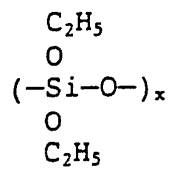

$Si(OCH_2CH_2CH_3)_4$

(x ist eine Zahl mit einem Wert von 2 bis 50)

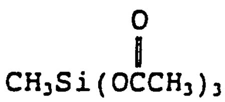

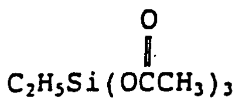

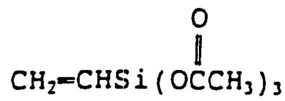

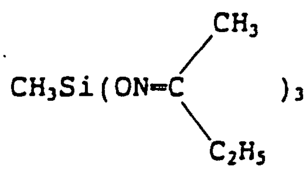

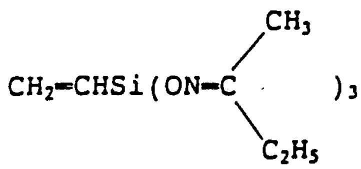

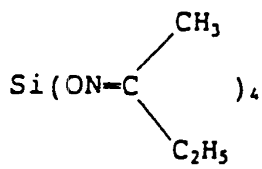

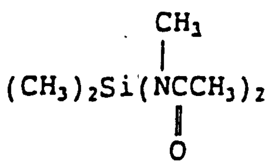

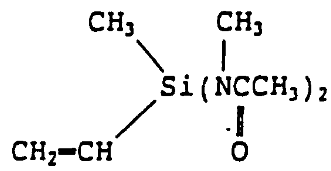

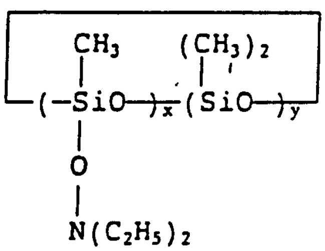

(x/y = 2/2, 3/1)

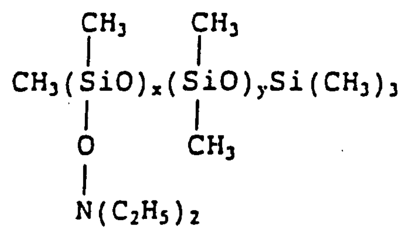

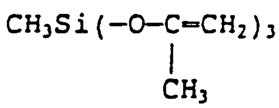

**6.** Zusammensetzung nach Anspruch 5, in der das Vemetzungsmittel in einer Menge von 0, 1 bis 80 Gew.-Teilen auf 100 Gew.-Teile Polymethyl-silsesquioxan enthalten ist.

**7.** Zusammensetzung nach Anspruch 6, in der das genannte Vemetzungsmittel in einer Menge von 1 bis 70 Gew. -Teilen auf 100 Gew.-Teile Polymethyl-silsesquioxan enthalten ist.

**8.** Härtbare Polymethyl-silsesquioxan-Zusammensetzung nach einem der Ansprüche 1, 2 oder 5, in der das härtbare Polymethyl-silsesquioxan hergestellt wurde durch Hydrolysieren eines Methyltrihalogensilans der folgenden Formel $MeSiX_3$ (worin Me für eine Methylgruppe und X für ein Halogenatom, ausgewählt aus F, Cl, Br und I, stehen) und Durchführung einer Kondensationsreaktion mit dem Hydrolyseprodukt in einem Zwei-Phasen-System, das besteht aus Wasser und einer Substanz, ausgewählt ist aus (a) einem Sauerstoff enthaltenden organischen Lösungsmittel oder (b) einem Sauerstoff enthaltenden organischen Lösungsmittel in einer Mischung, die ein in einer Menge von nicht mehr als 50 Vol.-% eingearbeitetes Kohlenwasserstoff-Lösungsmittel enthält.

**9.** Zusammensetzung nach einem der Ansprüche 1, 2 oder 3, worin das durchschnittliche Molekulargewicht (M), berechnet für Polystyrol, innerhalb des Bereiches von 380 bis 1800.

**10.** Härtbare Polymethyl-silsesquioxan-Zusammensetzung nach Anspruch 8, in der das härtbare Polymethylsilsesquioxan hergestellt wurde durch Zutropfen der nachstehend angegebenen Komponenten (A) oder (B) zu einem nachstehend angegebenen Zwei-Phasen-System, vor der genannten Hydrolyse- und. Kondensationsreaktionsstufe:

(A) Methyltrihalogensilan
(B) eine Lösung, hergestellt durch Auflösen des oben genannten Methyltrihalogensilans in (a) einem Sauerstoff enthaltenden organischen Lösungsmittel oder in (b) einer Mischung des Sauerstoff enthaltenden organischen Lösungsmittels, die ein in einer Menge von nicht mehr als 50 Vol.-% eingearbeitetes Kohlenwasserstoff-Lösungsmittel enthält.

**11.** Härtbare Polymethyl-silsesquioxan-Zusammensetzung nach Anspruch 8, in der das härtbare Polymethyl-silsesquioxan erhalten wurde durch Zutropfen einer Lösung, hergestellt durch Auflösen des Methyltrihalogensilans in (a) einem Sauerstoff enthaltenden organischen Lösungsmittel oder (b) einem Sauerstoff enthaltenden organischen Lösungsmittel in einer Mischung, die ein in einer Menge von nicht mehr als 50 Vol.-% eingearbeitetes Kohlenwasserstoff-Lösungsmittel enthält, nur zu Wasser, bevor die Hydrolyse- und Kondensationsreaktionsstufe durchgeführt wird.

**12.** Härtbare Polymethyl-silsesquioxan-Zusammensetzung nach Anspruch 8, in der das härtbare Polymethylsilsesquioxan erhalten wurde durch gleichzeitiges Eintropfen von Wasser und einer Lösung, hergestellt durch Auflösen des Methyltrihalogensilans in (a) einem Sauerstoff enthaltenden organischen Lösungsmittel oder (b) einem Sauerstoff enthaltenden organischen Lösungsmittel in einer Mischung, die ein in einer Menge von nicht mehr als 50 Vol.-% eingearbeitetes Kohlenwasserstoff-Lösungsmittel enthält, in einen leeren Reaktionsbehälter vor Durchführung der Hydrolyse- und Kondensationsreaktionsstufe.

**13.** Härtbare Polymethyl-silsesquioxan-Zusammensetzung nach Anspruch 8, in der das härtbare Polymethylsilsesquioxan erhalten wurde durch Hydrolysieren eines Methyltrihalogensilans und anschließende Durchführung einer Kondensationsreaktion mit dem Hydrolyseprodukt unter Verwendung eines Zwei-Phasen-Systems, das besteht aus Wasser und (a) einem Sauerstoff enthaltenden organischen Lösungsmittel oder (b) einem Sauerstoff enthaltenden organischen Lösungsmittel in einer Mischung, die ein in einer Menge von nicht mehr als 50 Vol.-% eingearbeitetes Kohlenwasserstoff-Lösungsmittel enthält.

**14.** Zusammensetzung nach Anspruch 8, worin das durchschnittliche Molekulargewicht (M), berechnet für Polystyrol, innerhalb des Bereiches von 380 bis 1800 liegt.

## Revendications

**1.** Composition de polyméthylsilsesquioxane durcissable **caractérisée en ce qu'**elle contient (1) un ou plusieurs éléments choisis parmi un catalyseur de durcissement ou un agent de réticulation et (2) un polyméthylsilsesquioxane durcissable ayant une masse moléculaire moyenne en nombre (M) étalonnée par rapport au polystyrène située dans la plage de 380 à 2000 et représenté par la formule suivante :

$$[CH_3SiO_{3/2}]_n[CH_3Si(OH)O_{2/2}]_m$$

(où m et n sont des nombres positifs donnant ladite masse moléculaire, le rapport m/(m+n) a une valeur située dans les limites d'une aire limitée par les droites définies par les formules (1) à (4) suivantes, les droites elles-mêmes et leurs intersections étant incluses :

(Formule 1) $m/(m+n) = 0{,}152 / (M \times 10^{-3}) + 0{,}10$

(Formule 2) $1/(M \times 10^{-3}) = 1\ 000/2\ 000$

(Formule 3) $1/(M \times 10^{-3}) = 1\ 000/380$

(Formule 4) $m/(m+n) = 0{,}034 / (M \times 10^{-3})$).

**2.** Composition selon la revendication 1, dans laquelle le catalyseur de durcissement est au moins un des composés choisis dans le groupe constitué par le diacétate d'étain, le dioctoate d'étain, le dilaurate d'étain, le tétraacétate d'étain, le diacétate de dibutylétain, le dioctoate de dibutylétain, le dilaurate de dibutylétain, le dioléate de dibutylétain, le diméthoxydibutylétain, l'oxyde de diméthylétain, le benzylmaléate de dibutylétain, le bis(triéthoxysiloxy)-dibutylétain, le diacétate de diphénylétain ; le tétraméthoxytitane, le tétraéthoxytitane, le tétra-n-propoxytitane, le tétra-i-propoxytitane, le tétra-n-butoxytitane, le tétra-i-butoxytitane, le tétrakis(2-éthylhexoxy)titane, le di-i-propoxy-bis(éthylacétoacétato)titane, le dipropoxybis(acétylacétonato)-titane, le di-i-propoxybis(acétylacétonato)titane, le dibutoxy-bis(acétylacétonato)titane, le tri-i-propoxyallylacétatotitane, le titane isopropoxyoctylèneglycol, l'oxyde de bis(acétylacétonato)titane; le diacétate de plomb, le bis(2-éthylhexanoato)plomb, le dinéodécanoate de plomb, le tétrakis(n-propionato)plomb, le diacétate de zinc, le bis(2-éthylhexanoato)zinc, le dinéodécanoate de zinc, le diundécénoate de zinc, le diméthacrylate de zinc, le diacétate de fer, le tétrakis(2-éthylhexanoato)zirconium, le tétrakis(méthacrylato)zirconium, le diacétate de cobalt ; l'aminopropyltriméthoxysilane, le N-(2-aminoéthyl)-3-aminopropyltriméthoxysilane, la tétraméthylguanidine, le tétraméthyl guanidylpropyltriméthoxysilane, le tétraméthylguanidylpropyldiméthoxysilane, le tétraméthylguanidylpropyl-tris(triméthylsiloxane)silane et le 1,8-diaza-bicyclo [5.4.0]-7-undécène.

**3.** Composition selon la revendication 2, dans laquelle le catalyseur de durcissement est contenu en une quantité de 0,01 à 10 parties en masse pour 100 parties en masse de polyméthylsilsesquioxane.

**4.** Composition selon la revendication 3, dans laquelle le catalyseur de durcissement est contenu en une quantité de 0,1 à 5 parties en masse pour 100 parties en masse de polyméthylsilsesquioxane.

**5.** Composition selon la revendication 1, dans laquelle l'agent réticulant est au moins un composé représenté par les formules suivantes :

$CH_3Si(OCH_3)_3$ $CH_2=CHSi(OCH_3)_3$ $Si(OC_2H_5)_4$

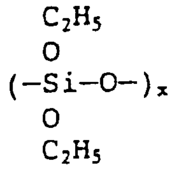

$Si(OCH_2CH_2CH_3)_4$

(x est un élément ayant une valeur de 2 à 50)

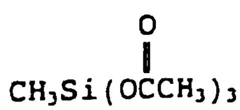
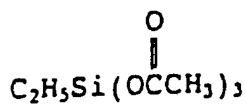
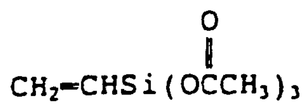

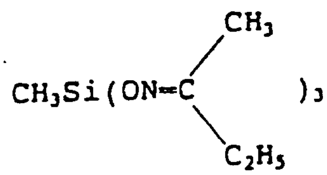
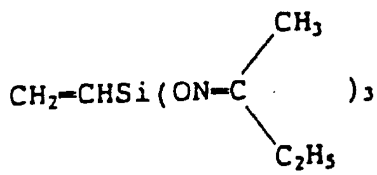
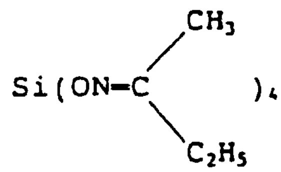

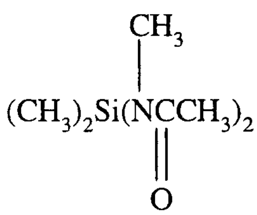
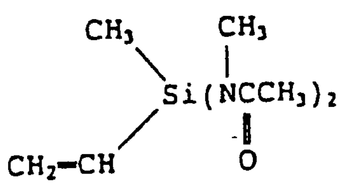

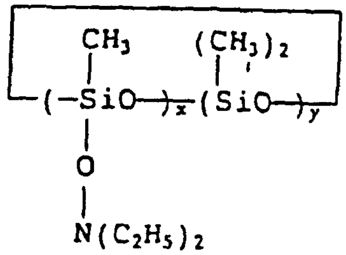 (x/y = 2/2, 3/1)

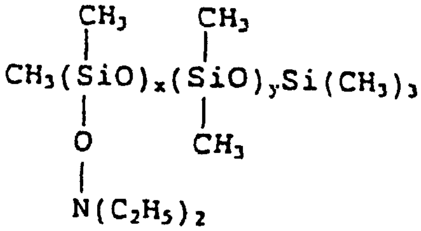
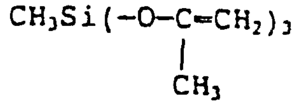

**6.** Composition selon la revendication 5, dans laquelle le catalyseur de durcissement est contenu en une quantité de 0,1 à 80 parties en masse pour 100 parties en masse de polyméthylsilsesquioxane.

**7.** Composition selon la revendication 6, dans laquelle le catalyseur de durcissement est contenu en une quantité de 0,1 à 70 parties en masse pour 100 parties en masse de polyméthylsilsesquioxane.

**8.** Composition de polyméthylsilsesquioxane durcissable selon l'une quelconque des revendications 1, 2 ou 5, où le polyméthylsilsesquioxane durcissable est obtenu en hydrolysant un méthyltrihalogénosilane représenté par la formule suivante $MeSiX_3$ (où Me est un groupe méthyle et X est un atome d'halogène choisi parmi F, C, Br et I) et en soumettant le produit d'hydrolyse à une réaction de condensation dans un système à deux phases constitué par de l'eau et une substance choisie parmi (a) un solvant organique contenant de l'oxygène ou (b) un solvant organique contenant de l'oxygène dans un mélange contenant un solvant hydrocarboné incorporé en une quantité ne dépassant pas 50 % en volume.

**9.** Composition selon l'une quelconque des revendications 1, 2 ou 3, dans laquelle la masse moléculaire moyenne (M) calculée pour le polystyrène est située dans la plage de 380 à 1800.

**10.** Composition de polyméthylsilsesquioxane durcissable selon la revendication 8, où le polyméthylsilsesquioxane durcissable est obtenu par addition goutte à goutte des composants (A) ou (B) indiqués ci-dessous dans un système à deux phases indiqué ci-dessous, avant ladite étape d'hydrolyse et de réaction de condensation :

(A) le méthyltrihalogénosilane
(B) une solution obtenue en dissolvant le méthyltrihalogénosilane sus-mentionné dans (a) un solvant organique contenant de l'oxygène ou dans (b) un mélange du solvant organique contenant de l'oxygène contenant un solvant hydrocarboné incorporé en une quantité ne dépassant pas 50 % en volume.

**11.** Composition de polyméthylsilsesquioxane durcissable selon la revendication 8, où le polyméthylsilsesquioxane durcissable est obtenu par addition goutte à goutte, dans de l'eau uniquement, d'une solution préparée en dissolvant le méthyltrihalogénosilane dans (a) un solvant organique contenant de l'oxygène ou (b) un solvant organique contenant de l'oxygène dans un mélange contenant un solvant hydrocarboné incorporé en une quantité ne dépassant pas 50 % en volume avant ladite étape d'hydrolyse et de réaction de condensation.

**12.** Composition de polyméthylsilsesquioxane durcissable selon la revendication 8, où le polyméthylsilsesquioxane durcissable est obtenu par addition simultanée, goutte à goutte, dans un réacteur vide, d'eau et d'une solution préparée en dissolvant le méthyltrihalogénosilane dans (a) un solvant organique contenant de l'oxygène ou (b) un solvant organique contenant de l'oxygène dans un mélange contenant un solvant hydrocarboné incorporé en une quantité ne dépassant pas 50 % en volume avant ladite étape d'hydrolyse et de réaction de condensation.

**13.** Composition de polyméthylsilsesquioxane durcissable selon la revendication 8, où le polyméthylsilsesquioxane durcissable est obtenu en hydrolysant un méthyltrihalogénosilane, puis en soumettant le produit de l'hydrolyse à une réaction de condensation utilisant un système à deux phases constitué par de l'eau et (a) un solvant organique contenant de l'oxygène ou (b) un solvant organique contenant de l'oxygène dans un mélange contenant un solvant hydrocarboné incorporé en une quantité ne dépassant pas 50 % en volume.

**14.** Composition selon la revendication 8, dans laquelle la masse moléculaire moyenne (M) calculée pour le polystyrène est située dans la plage de 380 à 1800.

Fig.1

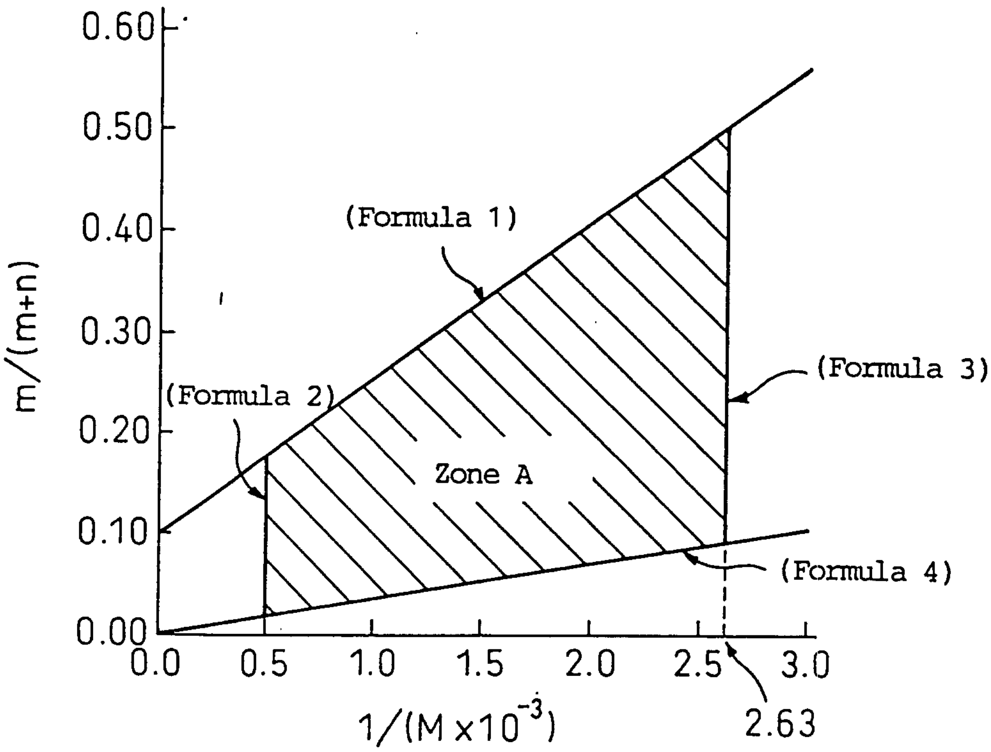
0.60
0.50
0.40
0.30
0.20
0.10
0.00
m/(m+n)
(Formula 1)
(Formula 2)
(Formula 3)
(Formula 4)
Zone A
0.0
0.5
1.0
1.5
2.0
2.5
3.0
2.63
1/(M x10^-3)